(19) Europäisches Patentamt
European Patent Office
Office européen des brevets

(11) EP 3 686 772 B1

(12) EUROPEAN PATENT SPECIFICATION

(45) Date of publication and mention
of the grant of the patent:
**10.07.2024 Bulletin 2024/28**

(51) International Patent Classification (IPC):
**G06V 40/20** (2022.01)    **G06V 10/82** (2022.01)

(52) Cooperative Patent Classification (CPC):
**G06V 40/20; G06V 10/82**

(21) Application number: **19199566.1**

(22) Date of filing: **25.09.2019**

(54) **ON-DEVICE CLASSIFICATION OF FINGERTIP MOTION PATTERNS INTO GESTURES IN REAL-TIME**

VORRICHTUNGSINTERNE KLASSIFIZIERUNG VON FINGERSPITZENBEWEGUNGSMUSTERN ZU GESTEN IN ECHTZEIT

CLASSIFICATION SUR DISPOSITIF DE SCHÉMAS DE MOUVEMENT DE BOUT DU DOIGT DANS DES GESTES EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2019 IN 201921003256**

(43) Date of publication of application:
**29.07.2020 Bulletin 2020/31**

(73) Proprietor: **Tata Consultancy Services Limited Maharashtra (IN)**

(72) Inventors:
• **HEBBALAGUPPE, Ramya Sugnanamurthy**
122003 Gurgaon, Haryana (IN)
• **JAIN, Varun**
122003 Gurgaon, Haryana (IN)
• **GARG, Gaurav**
122003 Gurgaon, Haryana (IN)

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **GARG GAURAV ET AL: "DrawInAir: A Lightweight Gestural Interface Based on Fingertip Regression", 23 January 2019, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 229 - 240, ISBN: 978-3-319-10403-4, XP047501296**
• **DANI MEGHAL ET AL: "Mid-Air Fingertip-Based User Interaction in Mixed Reality", 2018 IEEE INTERNATIONAL SYMPOSIUM ON MIXED AND AUGMENTED REALITY ADJUNCT (ISMAR-ADJUNCT), IEEE, 16 October 2018 (2018-10-16), pages 174 - 178, XP033542813, DOI: 10.1109/ISMAR-ADJUNCT.2018.00061**
• **MAURYA JITENDER ET AL: "Real Time Hand Segmentation on Frugal Headmounted Device for Gestural Interface", 2018 25TH IEEE INTERNATIONAL CONFERENCE ON IMAGE PROCESSING (ICIP), IEEE, 7 October 2018 (2018-10-07), pages 4023 - 4027, XP033454786, DOI: 10.1109/ICIP.2018.8451213**
• **SANDLER MARK ET AL: "MobileNetV2: Inverted Residuals and Linear Bottlenecks", 2018 IEEE/CVF CONFERENCE ON COMPUTER VISION AND PATTERN RECOGNITION, IEEE, 18 June 2018 (2018-06-18), pages 4510 - 4520, XP033473361, DOI: 10.1109/CVPR.2018.00474**

**Description**

TECHNICAL FIELD

The disclosure herein generally relates to classification techniques, and, more particularly, to on-device classification of fingertip motion patterns into gestures in real-time.

BACKGROUND

Over the past few decades, information technology has transitioned from desktop to mobile computing. Smartphones, tablets, smart watches and Head Mounted Devices (HMDs) are (or have) slowly replacing (or replaced) the desktop based computing. There has been a clear shift in terms of computing from office and home-office environments to an anytime-anywhere activity. Mobile phones form a huge part of lives: the percentage of traffic on the internet generated from them is overtaking its desktop counterparts. Naturally, with this transition, the way humans interact with these devices also has evolved from keyboard/mice to gestures, speech and brain computer interfaces. In a noisy outdoor setup, speech interfaces tend to be less accurate, and as a result the combination of hand gestural interface and speech are of interest to most HCI researchers. Hand gesture recognition on a real-time feed or a video is a form of activity recognition. Hand gestures form an intuitive means of interaction in Mixed Reality (MR) applications. However, accurate gesture recognition can be achieved only through deep learning models or with the use of expensive sensors. Despite the robustness of these deep learning models, they are generally computationally expensive and obtaining real-time performance is still a challenge.

GARG GAURAV ET AL: "DrawInAir: A Lightweight Gestural Interface Based on Fingertip Regression" states that hand gestures form a natural way of interaction on Head Mounted Devices (HMDs) and smartphones. HMDs such as the Microsoft HoloLens and ARCore/ARKit platform enabled smartphones are expensive and are equipped with powerful processors and sensors such as multiple cameras, depth and IR sensors to process hand gestures. To enable mass market reach via inexpensive Augmented Reality (AR) headsets without built-in depth or IR sensors, the authors propose a real-time, in-air gestural framework that works on monocular RGB input, termed, DrawInAir. DrawInAir uses fingertip for writing in air analogous to a pen on paper. The major challenge in training egocentric gesture recognition models is in obtaining sufficient labeled data for end-to-end learning. Thus, they design a cascade of networks, consisting of a CNN with differentiable spatial to numerical transform (DSNT) layer, for fingertip regression, followed by a Bidirectional Long Short-Term Memory (Bi-LSTM), for a real-time pointing hand gesture classification. They highlight how a model, that is separately trained to regress fingertip in conjunction with a classifier trained on limited classification data, would perform better over end-to-end models. They also propose a dataset of 10 egocentric pointing gestures designed for AR applications for testing our model. They show that the framework takes 1.73s to run end-to-end and has a low memory footprint of 14MB while achieving an accuracy of 88.0% on egocentric video dataset.

DANI MEGHAL ET AL: "Mid-Air Fingertip-Based User Interaction in Mixed Reality" states that with data growing at a huge rate, there arises a need for advanced data visualization techniques. Visualizing these data sets in Mixed Reality (MR) mode provides an immersive experience to the user in the context of the real-world applications. Most of the existing works can only be used with inordinately priced devices such as Microsoft HoloLens, Meta Glass that use proprietary hardware for data visualization and user interaction through hand gestures. In this paper, the authors demonstrate a cost-effective solution for data visualization using frugal devices such as Google Cardboard, VR Box etc. in MR mode. However, these devices still employ only primitive modes of interaction such as the magnetic trigger, conductive lever and have a limited user-input capability. To interact with visualizations and facilitate rich user experience, they propose the use of intuitive pointing fingertip gestural interface in the user's Field of View (FoV). The proposed pointing hand gesture recognition framework is driven by cascade of state-of-the-art deep learning model - Faster RCNN for localizing the hand followed by a proposed regression CNN for fingertip localization. They conducted both objective and subjective evaluation to demonstrate the performance of their proposed method. Objective metrics are fingertip recognition accuracy and computational time. The subjective evaluation includes user comfort and effectiveness of fingertip interaction that is proposed.

SUMMARY

Embodiments of the present disclosure present technological improvements as solutions to one or more of the above-mentioned technical problems recognized by the inventors in conventional systems. A processor implemented method for an on-device classification of fingertip motion patterns into gestures in real-time. The method comprises receiving in real-time, in a Cascaded Deep Learning Model (CDLM) executed via the one or more hardware processors of a mobile communication device, a plurality of Red, Green and Blue (RGB) input images from an image capturing device, wherein each of the plurality of RGB input images comprises a hand gesture; detecting in real-time, using an object detector comprised in the Cascaded Deep Learning Model (CDLM) executed via the one or more hardware processors on the mobile communication device, a plurality of hand candidate bounding boxes from the received plurality of RGB input images, wherein each of the plurality of hand candidate bounding boxes is specific to a corresponding RGB image from the received plurality of RGB input images, wherein each of the plurality of hand candidate bounding boxes comprises a hand candidate; downscaling in real-time, the hand candidate from each of the plurality of hand candidate bounding boxes to obtain a set of down-scaled hand candidates; detecting in real-time, using a Fingertip regressor comprised in the Cascaded Deep Learning Model (CDLM) executed via the one or more hardware processors on the mobile communication device, a spatial location of a fingertip from each down-scaled hand candidate from the set of down-scaled hand candidates, wherein the spatial location of the fingertip from the set of down-scaled hand candidates represents a fingertip motion pattern; and classifying in real-time, via a Bidirectional Long Short Term Memory (Bi-LSTM) Network comprised in the Cascaded Deep Learning Model (CDLM) executed via the one or more hardware processors on the mobile communication device, using a first coordinate and a second coordinate from the spatial location of the fingertip, the fingertip motion pattern into one or more hand gestures.

Each of the hand candidate bounding boxes comprising the hand candidate depicts a pointing gesture pose to be utilized for classifying into the one or more hand gestures.

The step of classifying the fingertip motion pattern into one or more hand gestures comprises applying a regression technique on the first coordinate and the second coordinate of the fingertip.

The spatial location of the fingertip is detected based on a presence of a positive pointing-finger hand detection on a set of consecutive frames in the plurality of RGB input images, and wherein the presence of the positive pointing-finger hand detection is indicative of a start of the hand gesture.

In an embodiment, an absence of a positive pointing-finger hand detection on a set of consecutive frames in the plurality of RGB input images is indicative of an end of the hand gesture.

In another embodiment, there is provided a system for classification of fingertip motion patterns into gestures in real-time. The system comprises a memory storing instructions; one or more communication interfaces; and one or more hardware processors coupled to the memory via the one or more communication interfaces, wherein the one or more hardware processors are configured by the instructions to: receive in real-time, in a Cascaded Deep Learning Model (CDLM) comprised in the memory and executed via the one or more hardware processors of the system, a plurality of Red, Green and Blue (RGB) input images from an image capturing device, wherein each of the plurality of RGB input images comprises a hand gesture; detect in real-time, using an object detector comprised in the Cascaded Deep Learning Model (CDLM) executed via the one or more hardware processors on the system, a plurality of hand candidate bounding boxes from the received plurality of RGB input images, wherein each of the plurality of hand candidate bounding boxes is specific to a corresponding RGB image from the received plurality of RGB input images, wherein each of the plurality of hand candidate bounding boxes comprises a hand candidate; downscaling in real-time, the hand candidate from each of the plurality of hand candidate bounding boxes to obtain a set of down-scaled hand candidates; detecting in real-time, using a Fingertip regressor comprised in the Cascaded Deep Learning Model (CDLM) executed via the one or more hardware processors on the system, a spatial location of a fingertip from each down-scaled hand candidate from the set of down-scaled hand candidates, wherein the spatial location of the fingertip from the set of down-scaled hand candidates represents a fingertip motion pattern; and classifying in real-time, via a Bidirectional Long Short Term Memory (Bi-LSTM) Network comprised in the Cascaded Deep Learning Model (CDLM) executed via the one or more hardware processors on the system, using a first coordinate and a second coordinate from the spatial location of the fingertip, the fingertip motion pattern into one or more hand gestures.

Each of the hand candidate bounding boxes comprising the hand candidate depicts a pointing gesture pose to be utilized for classifying into the one or more hand gestures.

In an embodiment, the fingertip motion pattern is classified into one or more hand gestures by applying a regression technique on the first coordinate and the second coordinate of the fingertip.

The spatial location of the fingertip is detected based on a presence of a positive pointing-finger hand detection on a set of consecutive frames in the plurality of RGB input images, and wherein the presence of the positive pointing-finger hand detection is indicative of a start of the hand gesture.

In an embodiment, an absence of a positive pointing-finger hand detection on a set of consecutive frames in the plurality of RGB input images is indicative of an end of the hand gesture.

In yet another embodiment, there are provided one or more non-transitory machine readable information storage mediums comprising one or more instructions which when executed by one or more hardware processors cause receiving in real-time, in a Cascaded Deep Learning Model (CDLM) executed via the one or more hardware processors of a mobile communication device, a plurality of Red, Green and Blue (RGB) input images from an image capturing device, wherein each of the plurality of RGB input images comprises a hand gesture; detecting in real-time, using an object detector comprised in the Cascaded Deep Learning Model (CDLM) executed via the one or more hardware processors on the mobile communication device, a plurality of hand candidate bounding boxes from the received plurality of RGB input images, wherein each of the plurality of hand candidate bounding boxes is specific to a corresponding RGB image from the received plurality of RGB input images, wherein each of the plurality of hand candidate bounding boxes comprises a hand candidate; downscaling in real-time, the hand candidate from each of the plurality of hand candidate bounding boxes to obtain a set of down-scaled hand candidates; detecting in real-time, using a Fingertip regressor comprised in the Cascaded Deep Learning Model (CDLM) executed via the one or more hardware processors on the mobile communication device, a spatial location of a fingertip from each down-scaled hand candidate from the set of down-scaled hand candidates, wherein the spatial location of the fingertip from the set of down-scaled hand candidates represents a fingertip motion pattern; and classifying in real-time, via a Bidirectional Long Short Term Memory (Bi-LSTM) Network comprised in the Cascaded Deep Learning Model (CDLM) executed via the one or more hardware processors on the mobile communication device, using a first coordinate and a second coordinate from the spatial location of the fingertip, the fingertip motion pattern into one or more hand gestures.

Each of the hand candidate bounding boxes comprising the hand candidate depicts a pointing gesture pose to be utilized for classifying into the one or more hand gestures.

In an embodiment, the step of classifying the fingertip motion pattern into one or more hand gestures comprises applying a regression technique on the first coordinate and the second coordinate of the fingertip.

The spatial location of the fingertip is detected based on a presence of a positive pointing-finger hand detection on a set of consecutive frames in the plurality of RGB input images, and wherein the presence of the positive pointing-finger hand detection is indicative of a start of the hand gesture.

In an embodiment, an absence of a positive pointing-finger hand detection on a set of consecutive frames in the plurality of RGB input images is indicative of an end of the hand gesture.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for on-device classification of fingertip motion patterns into gestures in real-time, in accordance with an embodiment of the present disclosure.

FIG. 2 illustrates an exemplary block diagram of the system for on-device classification of fingertip motion patterns into gestures in real-time, in accordance with an embodiment of the present disclosure, in accordance with an embodiment of the present disclosure.

FIG. 3 illustrates an exemplary flow diagram of a method for on-device classification of fingertip motion patterns into gestures in real-time using the system of FIG. 1 in accordance with an embodiment of the present disclosure.

FIG. 4 depicts a fingertip regressor architecture for fingertip localization as implemented by the system of FIG. 1, in accordance with an example embodiment of the present disclosure.

FIG. 5 depicts gesture sequences shown to users before data collection, in accordance with an example embodiment of the present disclosure.

FIG. 6 depicts image comparison of present disclosure versus conventional approaches that indicate results of detectors (hand candidate bounding boxes) in different conditions such as poor illumination, blurry rendering, indoor and outdoor environments respectively, in accordance with an example embodiment of the present disclosure.

FIGS. 7A-7B illustrate a graphical representations depicting comparison of finger localization of the present disclosure versus with conventional technique(s), in accordance with an example embodiment of the present disclosure.

FIG. 8 depicts an overall performance of the method of FIG. 3 on 240 egocentric videos captured using a smartphone based Google® Cardboard head-mounted device, in accordance with an example embodiment of the present disclosure.

DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. It is intended that the following detailed description be considered as exemplary only, with the true scope being indicated by the following claims.

Expensive Augmented Reality (AR)/Mixed Reality (MR) devices such as the Microsoft® HoloLens, Daqri and Meta Glasses provide a rich user interface by using recent hardware advancements. They are equipped with a variety of on-board sensors including multiple cameras, a depth sensor and proprietary processor(s). This makes them expensive and unaffordable for mass adoption.

In order to provide a user friendly interface via hand gestures, detecting hands in the user's Field of View (FoV), localising (or localizing) certain keypoints on the hand, and understanding their motion pattern has been of importance to the vision community in recent times. Despite having robust deep learning models to solve such problems using state-of-the art object detectors and sequence tracking methodologies, obtaining real-time performance, particularly, on systems, for example, an on-device, is still a challenge owing to resource constraints on memory and processing.

In the present disclosure, embodiments describe a computationally effective hand gesture recognition framework that works without depth information and the need of specialized hardware, thereby providing mass accessibility of gestural interfaces to the most affordable video see-through HMDs. These devices provide Virtual Reality (VR)/MR experiences by using stereo rendering of the smartphone camera feed but have limited user interaction capabilities.

Industrial inspection and repair, tele-presence, and data visualization are some of the immediate applications for the framework described by the embodiments of the present disclosure and which can work in real-time and has the benefit of being able to work in remote environments without the need of internet connectivity. To demonstrate the generic nature of the framework implemented in the present disclosure, detection of 10 complex gestures were performed using the pointing hand pose has been demonstrated with a sample Android application.

To this end, embodiments of the present disclosure provide systems and methods that implement hand gesture recognition framework that works in First Person View for wearable devices. The models are trained on a Graphics Processing Unit (GPU) machine and ported on an Android smartphone for its use with frugal wearable devices such as the Google® Cardboard and VR Box. The present disclosure implements hand gesture recognition framework that is driven by cascade deep learning models: MobileNetV2 for hand localisation (or localization), a fingertip regression architecture followed by a Bi-LSTM model for gesture classification.

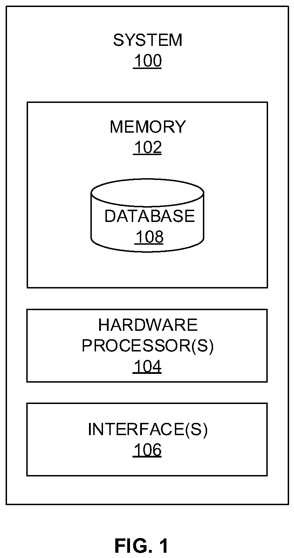

Referring now to the drawings, and more particularly to FIGS. 1 through 8, where similar reference characters denote corresponding features consistently throughout the figures, there are shown preferred embodiments and these embodiments are described in the context of the following exemplary system and/or method.

FIG. 1 illustrates an exemplary block diagram of a system 100 for on-device classification of fingertip motion patterns into gestures in real-time, in accordance with an embodiment of the present disclosure. The system 100 may also be referred as 'a classification system' or 'a mobile communication device' or 'a video see through head mounted device' and interchangeably used hereinafter. In an embodiment, the system 100 includes one or more processors 104, communication interface device(s) or input/output (I/O) interface(s) 106, and one or more data storage devices or memory 102 operatively coupled to the one or more processors 104. The one or more processors 104 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the device 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 108 can be stored in the memory 102, wherein the database 108 may comprise information, for example, a Red, Green, and Blue (RGB) input images captured from one or more computing devices (e.g., video see through head mounted devices), data pertaining to bounding boxes comprising hand candidates, down-scaled hand candidates, spatial location of fingertip detected from the down-scaled hand candidates, x and y coordinates derived from the spatial location of fingertip, and motion patterns of the fingertip being classified into one or more gestures, and the like. In an embodiment, the memory 102 may store (or stores) one or more technique(s) (e.g., feature extractor or feature detector - also referred as MobileNetV2, image processing technique(s) such as down-scaling), fingertip regression/regressor, Bi-Long Short Term Memory (Bi-LSTM) network and the like.), which when executed by the one or more hardware processors 104 perform the methodology described herein. The memory 102 further comprises (or may further comprise) information pertaining to input(s)/output(s) of each step performed by the systems and methods of the present disclosure. In an embodiment, the MobileNetV2 (feature extractor or feature detector), the image processing technique(s), the fingertip regression/regressor and the Bi-Long Short Term Memory (Bi-LSTM) network together coupled form a Cascaded Deep Learning Model (CDLM) which when executed by the one or more hardware processors 104 perform the methodology described herein.

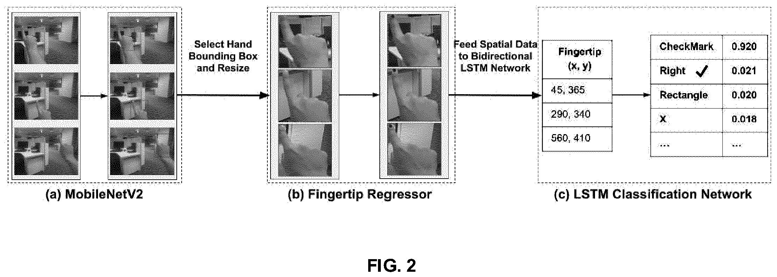

FIG. 2, with reference to FIG. 1, illustrates an exemplary block diagram of the system 100 for on-device classification of fingertip motion patterns into gestures in real-time, in accordance with an embodiment of the present disclosure, in accordance with an embodiment of the present disclosure. Alternatively, FIG. 2, illustrates an exemplary implementation of the system 100 for on-device classification of fingertip motion patterns into gestures in real-time, in accordance with an embodiment of the present disclosure, in accordance with an embodiment of the present disclosure. The architecture as depicted in FIG. 2 is configured to recognize a variety of hand gestures for frugal AR wearable devices with a monocular RGB camera input that requires only a limited amount of labelled classification data for classifying fingertip motion patterns into different hand gestures.

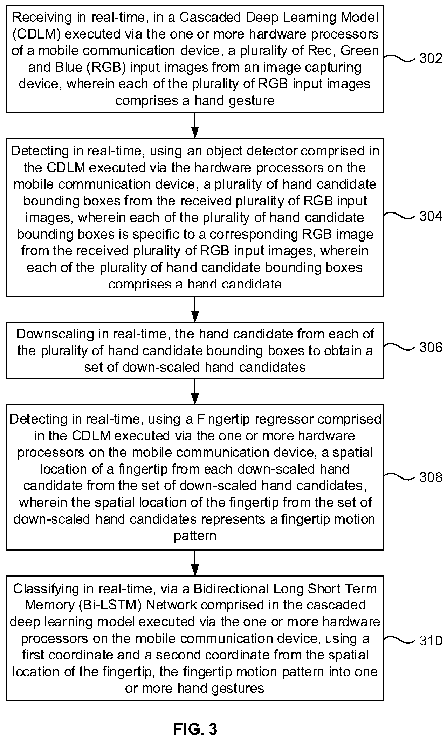

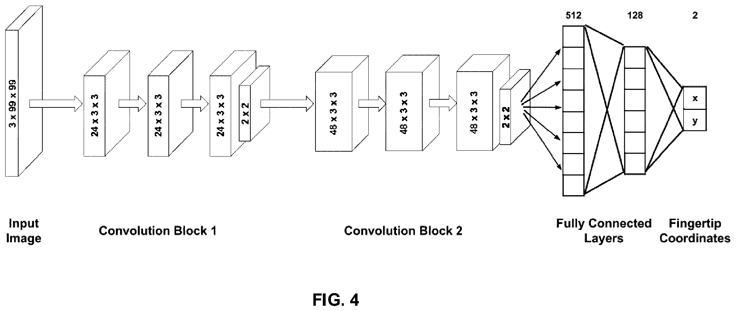

FIG. 3, with reference to FIGS. 1-2, illustrates an exemplary flow diagram of a method for on-device classification of fingertip motion patterns into gestures in real-time using the system 100 of FIG. 1 in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, block diagrams of FIGS. 2 and 4 and the flow diagram as depicted in FIG. 3. In an embodiment of the present disclosure, at step 302, the one or more hardware processors 104 receive in real-time, in a Cascaded Deep Learning Model (CDLM) executed via the one or more hardware processors of the mobile communication device 100, a plurality of Red, Green and Blue (RGB) input images from an image capturing device, wherein each of the plurality of RGB input images comprises a hand gesture. In other words, the mobile communication device 100 comprises the cascaded deep learning model having a feature extractor/an object detector (e.g., MobileNetV2 in the present disclosure) which takes single RGB image(s) as an input.

In an embodiment of the present disclosure, at step 304, the one or more hardware processors 104 detect in real-time, using an object detector comprised in the Cascaded Deep Learning Model (CDLM) executed on the mobile communication device 100, a plurality of hand candidate bounding boxes from the received plurality of RGB input images. In an embodiment, each of the plurality of hand candidate bounding boxes is specific to a corresponding RGB image from the received plurality of RGB input images and each hand candidate bounding box comprises a hand candidate. In other words, the MobileNetV2 outputs a hand candidate bounding box that comprises a hand candidate. Each of the hand candidate bounding boxes comprising the hand candidate depicts a pointing gesture pose to be utilized for classifying into the one or more hand gestures. FIG. 2 depicts a hand candidate output by an object detector of the cascaded deep learning model executed on the system 100 of FIG. 1.

MobileNetV2 is a streamlined architecture that uses depth-wise separable convolutions to build light weight deep neural networks. The depth-wise separable convolution factorizes a standard convolution into a depth-wise convolution and a 1x1 convolution also called a point-wise convolution thereby reducing the number of parameters in the network. It builds upon the ideas from MobileNetV1 (an earlier version of object detector), however, it incorporates two new features to the architecture: (i) linear bottlenecks between the layers, and (ii) skip connections between the bottlenecks. The bottlenecks encode the model's intermediate inputs and outputs while the inner layer encapsulates the model's ability to transform from lower-level concepts such as pixels to higher level descriptors such as image categories. Skip connections, similar to the traditional residual connections, enable faster training without any loss in accuracy.

In experiments conducted by the present disclosure to detect the hand candidate in RGB input images obtained from wearable devices, systems and methods of the present disclosure evaluate the MobileNetV2 feature extractor with conventional systems and methods/techniques (e.g., a convention technique 1 - SSDLite - an object detection module. The Experiments and Results section highlights the results in comparison with prior art techniques with a pre-trained VGG-16 model consisting of 13 shared convolutional layers along with other compact models such as ZF (e.g., Zeiler and Fergus 2014) and VGG1024 (Chatfield et al. 2014) by modifying the last fully connected layer to detect hand class (pointing gesture pose).

Referring back to steps of FIG. 3, in an embodiment of the present disclosure, at step 306, the one or more hardware processors 104 downscale in real-time, the hand candidate from each of the plurality of hand candidate bounding boxes to obtain a set of down-scaled hand candidates. In other words, input images comprising hand candidates are first down-scaled to a specific resolution (e.g., 640x480 resolution in the present disclosure for a specific use case scenario) to reduce processing time without compromising on the quality of image features.

In an embodiment of the present disclosure, at step 308, the one or more hardware processors 104 detect in real-time, using a Fingertip regressor comprised in the Cascaded Deep Learning Model (CDLM) executed on the mobile communication device 100, a spatial location of a fingertip from each down-scaled hand candidate from the set of down-scaled hand candidates. In an embodiment, the spatial location of the fingertip from the set of down-scaled hand candidates represents a fingertip motion pattern. In other words, the detected hand candidates are then fed to the fingertip regressor as depicted in FIG. 2 which outputs the spatial location of the fingertip motion pattern (or also referred as fingertip).

In the present disclosure, the system 100 implements the fingertip regressor based on a Convolutional Neural Network (CNN) architecture to localise the (x, y) coordinates of the fingertip. The hand candidate detection (pointing gesture pose), discussed earlier, triggers the regression CNN for fingertip localisation. The hand candidate bounding box is first cropped and resized to 99x99 resolution before feeding it to the network depicted in FIG. 4. More specifically, FIG. 4, with reference to FIGS. 1 through 3, depicts a fingertip regressor architecture for fingertip localization as implemented by the system 100 of FIG. 1, in accordance with an example embodiment of the present disclosure.

The CNN architecture as implemented by the system 100 and present disclosure in FIG. 4 consists of two convolutional blocks each with three convolutional layers followed by a max-pooling layer. Finally, three fully connected layers are used to regress over the two coordinate values of fingertip point at the last layer. In the present disclosure, FIG. 4 depicts the fingertip regressor architecture for fingertip localisation. The input to the Bi-LSTM/LSTM classification network are 3x99x99 sized RGB images. Each of the 2 convolutional blocks have 3 convolutional layers each followed by a max-pooling layer. The 3 fully connected layers regress over fingertip spatial location. Since the aim is to determine continuous valued outputs corresponding to fingertip positions, Mean Squared Error (MSE) measure was used to compute loss at the last fully connected layer. The model was trained for robust localisation, and was compared with the architecture proposed by conventional technique(s).

In an embodiment of the present disclosure, at step 310, the one or more hardware processors 104 classify in real-time, via a Bidirectional Long Short Term Memory (Bi-LSTM) Network comprised in the Cascaded Deep Learning Model (CDLM) executed on the mobile communication device, using a first coordinate and a second coordinate from the spatial location of the fingertip, the fingertip motion pattern into one or more hand gestures. In other words, collection of these (e.g., spatial location - x and y coordinates of the fingertip motion patterns) are then fed it to the Bi-LSTM network for classifying the motion pattern into different gestures. More specifically, each fingertip motion pattern is classified into one or more hand gestures by applying a regression technique on the first coordinate (e.g., say 'x' coordinate) and the second coordinate (e.g., say 'y' coordinate) of the fingertip. In an embodiment, the 'x' and 'y' coordinates of the fingertip (or fingertip motion pattern) as depicted in FIG. 2 are 45 and 365 respectively for an action (e.g., gesture) being performed by a user. In another embodiment, the 'x' and 'y' coordinates of the fingertip as depicted in FIG. 2 are 290 and 340 respectively for another action being performed by the user. In yet another embodiment, the 'x' and 'y' coordinates of the fingertip as depicted in FIG. 2 are 560 and 410 respectively for yet another action being performed by the user. Additionally, in the section (c) of FIG. 2, that depicts the Bi-LSTM/LSTM classification network, the present disclosure also describes classification of fingertip detections on subsequent frames into different gestures (e.g., checkmark, right, rectangle, X (or delete), etc.). Further, each of these gestures that a particular fingertip motion pattern is classified into, the system 100 or the Bi-LSTM/LSTM classification network computes (or provides) a probability score (e.g., the probability score may be computed using known in the art technique(s)) that indicates the probability of a particular fingertip motion pattern to be identified/classified as a candidate gesture. For instance, for the 'x' and 'y' coordinates of the fingertip as 45 and 365 respectively, the Bi-LSTM/LSTM classification network has classified the fingertip motion pattern say as 'checkmark gesture' and has computed a probability score of 0.920 of that fingertip motion pattern of being the checkmark gesture, in one example embodiment. In other words, the probability score of 0.920 indicates that a particular fingertip motion pattern is a probable checkmark gesture based on its associated spatial location (or 'x' and 'y' coordinates) and is classified thereof, in one example embodiment. Similarly, probability scores are computed for other fingertip motion patterns for classification into other gestures as depicted in FIG. 4.

As described above, the fingertip localization network (or fingertip regressor) outputs the spatial locations of the fingertip (x, y), which are then fed as an input to the gesture classification network (or Bi-LSTM network). To reduce computational cost, input (x; y) coordinate is adjusted by the system 100 instead of the entire frame to the Bi-LSTM network thereby helping achieve real-time performance. It was observed through the experiments conducted by the present disclosure that Bi-LSTMs network as implemented by the system 100 performs better than LSTMs network for particular classification task since they process the sequence in both forward and reverse direction. The usage of LSTMs inherently means that the entire framework is also adaptable to videos and live feeds with variable length frame sequences. This is particularly important as the length of gestures depends on the user performing it and on the performance of the preceding two networks.

Conventional technique(s) have conducted a feasibility study for ranking the available modes of interaction for frugal Google® Cardboard set-up and reported that the frequent usage of magnetic trigger and conductive lever leads to wear and tear of the device and it scored poorly on usability. Hence, the present disclosure implements an automatic and implicit trigger to signify the starting and ending of a user input sequence. In the event of a positive pointing-finger hand detection on five consecutive frames, the framework is triggered to start recording the spatial location of the fingertip. In other words, the spatial location of the fingertip is detected based on a presence of a positive pointing-finger hand detection on a set of consecutive frames in the plurality of RGB input images, and this presence of the positive pointing-finger hand detection signifies a start of the hand gesture.

Similarly, the absence of any hand detections on (five) consecutive frames denotes the end of a gesture. In other words, an absence of a positive pointing-finger hand detection on a set of consecutive frames in the plurality of RGB input images signifies an end of the hand gesture. The recorded sequence was then fed as an input to the Bi-LSTM layer consisting of 30 units. The forward and backward activations were multiplied before being passed on to the next flattening layer that makes the data one-dimensional. It is then followed by a fully connected layer with 10 output scores that correspond to each of the 10 gestures. Since the task is to classify 10 gesture classes, a softmax activation function was used for interpreting the output scores as unnormalised log probabilities and squashes the output scores to be between 0 and 1 using the following equation:

$$\sigma(s)_j = \frac{e^{s_j}}{\sum_{k=1}^{K} e^{s_k}} \qquad (1)$$

where $K$ denotes number of classes, s is a $K \times 1$ vector of scores, an input to softmax function, and $j$ is an index varying from 1 to $K$. $\sigma(s)$ is $K \times 1$ output vector denoting the posterior probabilities associated with each gesture. The cross-entropy loss has been used in training to update the model in network back-propagation.

DATASETS

Present disclosure used the SCUT-Ego-Finger Dataset (e.g., refer Deepfinger: A cascade convolutional neuron network approach to finger key point detection in egocentric vision with mobile camera. In Systems, Man, and Cybernetics (SMC), 2015 IEEE International Conference on, 2944-2949. IEEE" - also referred as Huang et al. 2015) for training the hand detection and the fingertip localization modules depicted in FIG. 2. The dataset included 93729 frames of pointing hand gesture including hand candidate bounding boxes and index finger key-point coordinates.

(EgoGestAR) DATASET

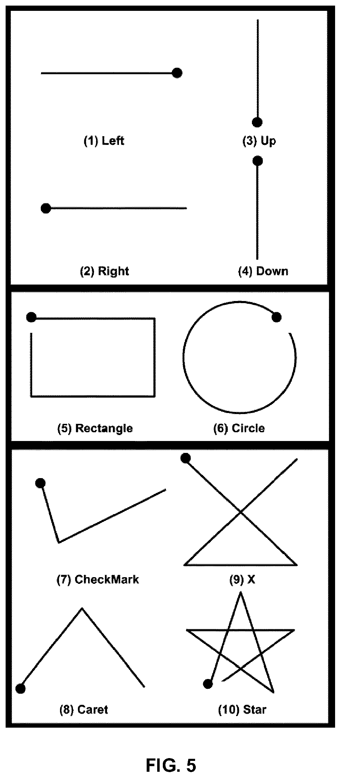

A major factor that has hampered the advent of deep learning in the task of recognizing temporal hand gestures is lack of available large-scale datasets to train neural networks on. Hence, to train and evaluate the gesture classification network, an egocentric vision gesture dataset for AR/MR wearables was used by the present disclosure. The dataset includes 10 gesture patterns. To introduce variability in the data, the dataset was collected with the help of 50 subjects chosen at random (from a laboratory) with ages spanning from 21 to 50. The average age of the subjects was 27.8 years. The dataset consisted of 2500 gesture patterns where each subject recorded 5 samples of each gesture. The gestures were recorded by mounting a tablet personal computer PC to a wall. The patterns drawn by the user's index finger on a touch interface application with position sensing region was stored. The data was captured at a resolution of 640x480. FIG. 5 describes the standard input sequences shown to the users before data collection. These gestures from the subjects (or users) were primarily divided into 3 categories for effective utilization in the present disclosure's context of data visualization in Mixed Reality (MR) applications. More specifically, FIG. 5, with reference to FIGS. 1 through 4, depicts gesture sequences shown to users before data collection, in accordance with an example embodiment of the present disclosure. The 3 categories shall not be construed as limiting the scope of the present disclosure, and are presented herein by way of examples and for better understanding of the embodiments described herein:

1. 4 swipe gesture patterns (Up, Down, Left, and Right) for navigating through graph visualisations/lists.
2. 2 gesture patterns (Rectangle and Circle) for Region of Interest (RoI) highlighting in user's FoV and for zoom-in and zoom-out operations.
3. 4 gesture patterns (CheckMark: Yes, Caret: No, X: Delete, Star: Bookmark) for answering contextual questions while interacting with applications such as industrial inspection (Ramakrishna et al. 2016).

Further, to test the entire framework as implemented by the systems and methods of the present disclosure, 240 videos were recorded by a random subset of the aforementioned subjects performing each gesture 22 times. Additional 20 videos of random hand movements were also recorded. The videos were recorded using a Android® device mounted on a Google® Cardboard. High quality videos were captured at a resolution of 640x480, and at 30 frames per second (FPS).

EXPERIMENTS AND RESULTS

Since the framework implemented by the system 100 of the present disclosure comprises of three networks, performance of each of the networks was individually evaluated to arrive at the best combination of networks for the application as proposed by the present disclosure. An 8 core Intel® Core™ i7-6820HQ CPU, 32GB memory and an Nvidia® Quadro M5000M GPU machine was utilized for experiments. A Snapdragon® 845 chipset smartphone was used which was interfaced with a server (wherever needed: to evaluate the method that runs on device) using a local network hosted on a Linksys EA6350 802.11ac compatible wireless router.

For all the experiments conducted by the present disclosure pertaining to hand detection and fingertip localisation, hand dataset as mentioned above was utilized. Out of the 24 subjects present in the dataset, 17 subjects' data was chosen for training with a validation split of 70:30, and 7 subjects' data (24; 155 images) for testing the networks.

HAND DETECTION

Table 1 reports percentage of mean Absolute Precision (mAP) and frame rate for hand candidate detection. More specifically, Table 1 depicts performance of various methods on the SCUT-Ego-Finger dataset for hand detection. mAP score, frame-rate and the model size are reported with the variation in IoU.

Table 1

| Model | On Device | mAP IoU=0.5 | mAP IoU=0.7 | Rate (FPS) | Model Size |
|---|---|---|---|---|---|
| F-RCNN VGG16 (conventional model) | No | 98.1 | 86.9 | 3 | 546 MB |
| F-RCNN VGG1024 (conventional model) | No | 96.8 | 86.7 | 10 | 350 MB |
| F-RCNN ZF (conventional model) | No | 97.3 | 89.2 | 12 | 236 MB |
| YOLOv2 (conventional model) | Yes | 93.9 | 78.2 | 2 | 202 MB |
| **MobileNetV2 (Present disclosure)** | **Yes** | **89.1** | **85.3** | **9** | **12 MB** |

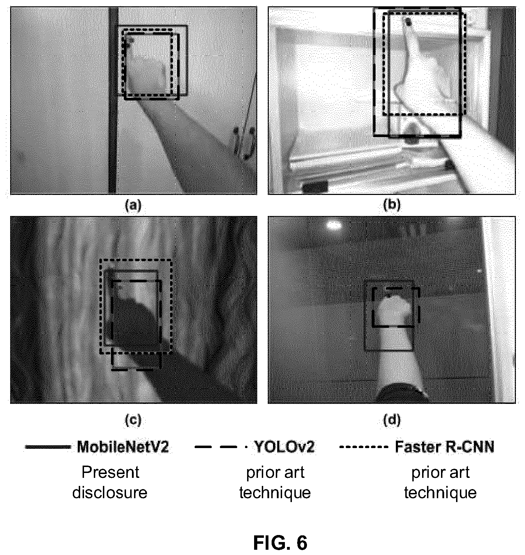

Even though MobileNetV2 achieved higher frame-rate compared to others, it produced high false positives hence resulted in poor classification performance. It is observed that prior art technique (e.g., YOLOv2 - depicted by dashed line) can also run on-device although it outputs fewer frames as compared to MobileNetV2. At an Intersection over Union (IoU) of 0.5, YOLOv2 (depicted by dashed line) achieves 93.9% mAP on SCUT-Ego-Finger hand dataset whereas MobileNetV2 achieves 89.1% mAP. However, it was further observed that prior art technique (e.g., YOLOv2 - depicted by dashed line) performs poorly when compared to MobileNetV2 in localizing the hand candidate at higher IoU that is required for including the fingertip. FIG. 6, with reference to FIGS. 1 through 5, depicts image comparison of present disclosure versus conventional approaches that indicate results of detectors (hand candidate bounding boxes) in different conditions such as poor illumination, blurry rendering, indoor and outdoor environments respectively, in accordance with an example embodiment of the present disclosure. It is noticed that even though both the detectors are unlikely to predict false positives in the background, prior art technique (e.g., YOLOv2 - depicted by dashed line) makes more localisation errors proving MobileNetV2 to be a better fit for the use-case of the present disclosure.
It is further worth noticing that the model size for MobileNetV2 is significantly less than the rest of the models. It enables the present disclosure to port the model on mobile device and removes the framework's dependence on a remote server. This helps reduce latency introduced by the network and can enable wider reach of frugal devices for MR applications.

FINGERTIP LOCALIZATION

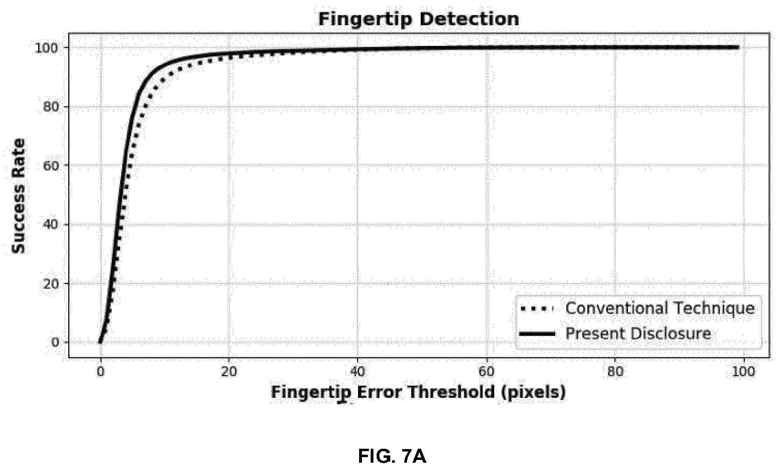

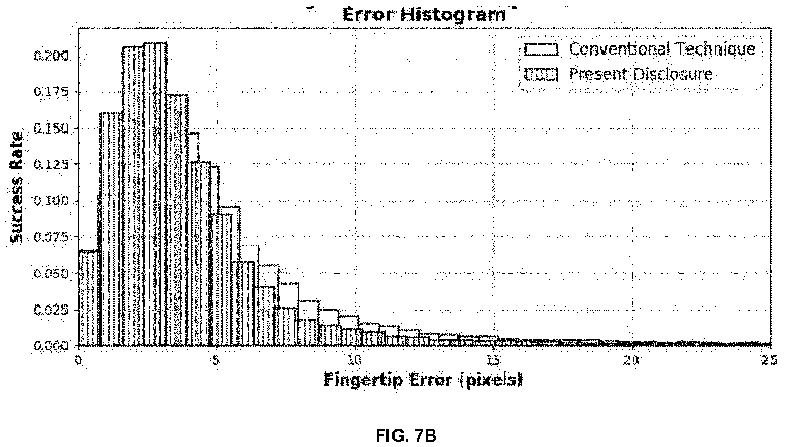

Present disclosure evaluated the model employed for fingertip localisation on the test set of 24,155 images. The $2 \times 1$ continuous-valued output corresponding to finger coordinate estimated at the last layer are been compared against ground truth values to compute rate of success with changing thresholds on the error (in pixels) and the resultant plot when compared to the network of conventional technique (e.g., refer A pointing gesture based egocentric interaction system: Dataset, approach and application. In Proceedings of the IEEE Conference on Computer Vision and Pattern Recognition Workshops, 16-23, by Huang, Y.; Liu, X.; Zhang, X.; and Jin, L. also referred as Huang et al. 2016) is shown in FIGS. 7A-7B. More specifically, FIGS. 7A-7B, with reference to FIGS. 1 through 6, illustrate a graphical representations depicting comparison of finger localization of the present disclosure versus with conventional technique(s), in accordance with an example embodiment of the present disclosure.
Adam optimiser with a learning rate of 0:001 has been used by the present disclosure. The model achieves 89.06% accuracy with an error tolerance of 10 pixels on an input image of $99 \times 99$ resolution. The mean absolute error is found to be 2.72 pixels for the approach of the present disclosure and is 3.59 pixels for the network proposed in conventional technique. It is evident from the graphical representation of FIGS. 7A-7B that the model implemented by the present disclosure achieves a higher success rate at any given error threshold (refer FIG. 7B). The fraction of images with low localization error is higher for the method of the present disclosure.

GESTURE CLASSIFICATION

The present disclosure utilized proprietary dataset for training and testing of the gesture classification network. Classification with an LSTM network in the same training and testing setting was also tried/attempted as the Bi-LSTM. During training, 2000 gesture patterns of the training set were used. A total of 8,230 parameters of the network were trained with a batch size of 64 and validation split of 80:20. Adam optimiser with learning rate of 0:001 has been used. The networks were trained for 900 epochs which achieved validation accuracy of 95.17% and 96.5% for LSTM and Bi-LSTM respectively. LSTM and Bi-LSTM achieve classification accuracy of 92.5% and 94.3% respectively, outperforming the traditional approaches (or conventional technique(s)) that are being used for similar classification tasks. Comparison of the LSTM and Bi-LSTM approaches by the system are presented with conventional techniques' classification are presented in below Table 2.

Table 2

| Method | Precision | Recall | F1 Score |
|---|---|---|---|
| Conventional technique/research X | 0.741 | 0.76 | 0.734 |
| Conventional technique/research Y | 0.860 | 0.842 | 0.851 |
| LSTM | 0.975 | 0.920 | 0.947 |
| **Bi-LSTM (Present disclosure)** | **0.956** | **0.940** | **0.948** |

Conventional techniques/research include for example, Conventional technique/research X - 'Comparison of two real-time hand gesture recognition systems involving stereo cameras, depth camera, and inertial sensor. In SPIE Photonics Europe, 91390C-91390C. International Society for Optics and Photonics. by Liu, K.; Kehtarnavaz, N.; and Carlsohn, M. 2014' and Conventional technique/research Y - 'Liblinear: A library for large linear classification. Journal of machine learning research 9(Aug):1871-1874, by Fan, R.-E.; Chang, K.-W.; Hsieh, C.-J.; Wang, X.-R.; and Lin, C.-J. 2008. - also referred as Fan et al.). More specifically Table 2 depicts performance of different classification methods on the proprietary dataset of the present disclosure. Average of precision and recall values for all classes is computed to get a single number.

Additionally, it was observed that the performance of traditional methods (or the conventional techniques as presented in Table 2) deteriorated significantly in the absence of sufficient data-points. Hence, they rely on complex interpolation techniques (leading to additional processing time and memory consumption) to give consistent results.

FRAMEWORK EVALUATION

Since the approach/method of the present disclosure is implemented or executed with a series of different networks, the overall classification accuracy in real-time may vary depending on the performance of each network used in the pipeline. Therefore, the entire framework was evaluated using 240 egocentric videos captured with a smartphone based Google® Cardboard head-mounted device. The MobileNetV2 model was used in the experiments conducted by the present disclosure as it achieved the best trade-off between accuracy and performance. Since the model can work independently on a smartphone using the TF-Lite engine, it removes the framework's dependence on a remote server and a quality network connection.

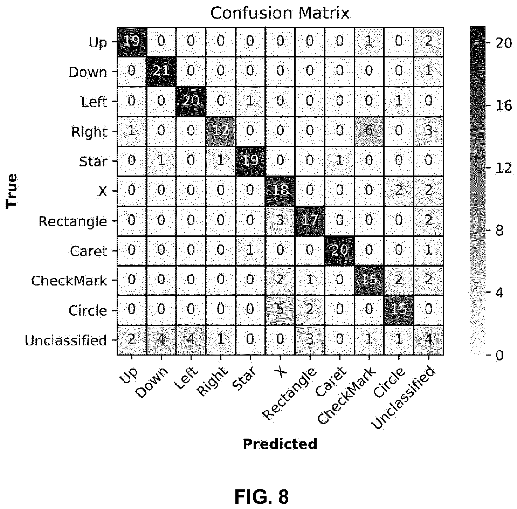

The framework achieved an overall accuracy of 80.00% on a dataset of 240 egocentric videos captured in FPV is as shown a matrix (also referred as confusion matrix) depicted in FIG. 8. More specifically, FIG. 8, with reference to FIGS. 1 through 7B, depicts an overall performance of the method of FIG. 3 on 240 egocentric videos captured using a smartphone based Google® Cardboard head-mounted device, in accordance with an example embodiment of the present disclosure. The gesture was detected when the predicted probability is more than 0.85. Accuracy of the method of present disclosure is 0.8 (excluding the unclassified class).

The MobileNetV2 network as implemented by the system 100 works at 9 FPS on 640 × 480 resolution videos, and the fingertip regressor as implemented by the system 100 is configured to deliver frame rates of up-to 166 FPS working at a resolution of 99 × 99. The gesture classification network as implemented by the system 100 processes a given stream of data in less than 100ms. As a result, the average response time of the framework was found to be 0:12s on a smartphone powered by a Snapdragon® 845 chip-set. The entire model had a (very small) memory footprint of 16.3 MB.

The systems and methods of the present disclosure were further compared with end-to-end Trained Gesture Classification Conventional Art Techniques (TGCCAT) and the results are depicted in Table 3. More specifically, Table 3 depicts analysis of gesture recognition accuracy and latency of various conventional models/techniques against the method of present disclosure. It is observed from below Table 3 that the method of present disclosure works on-device and effectively has the highest accuracy and the least response time.

Table 3

| Method | Accuracy | Time taken | On Device |
|---|---|---|---|
| TGCCAT 1 | 32.27 | 0.76 | No |
| TGCCAT 2 | 58.18 | 0.69 | No |
| TGCCAT 3 | 66.36 | 1.19 | No |
| **Present disclosure** | **80.00** | **0.12** | **Yes** |

Conventional technique TGCCAT 1 proposed a network that works with differential image input to convolutional LSTMs to capture the body parts' motion involved in the gestures performed in second-person view. Even after fine-tuning the model on the video dataset of the present disclosure, it produced an accuracy of only 32.14% as the data of the present disclosure involved a dynamic background and no static reference to the camera.

Conventional technique TGCCAT 2 uses 2D CNNs to extract features from each frame. These frame wise features were then encoded as a temporally deep video descriptor which are fed to an LSTM network for classification. Similarly, a 3D CNNs approach (Conventional technique TGCCAT 3) uses 3D CNNs to extract features directly from video clips. Table 3 shows that both of these conventional methods do not perform well. A plausible intuitive reason for this is that the network may be learning noisy and bad features while training. Other conventional techniques such as for example, attention based video classification also performed poorly owing to the high inter-class similarity. Since features from only a small portion of the entire frame is required, that is, the fingertip, such attention models appear redundant since the fingertip location is already known.

Further existing/conventional technique(s) and systems implement using virtual buttons that appear in stereo view by placing the fingertip over them which is like mid-air fingertip based user interaction. Such conventional techniques employ a Faster-Region Convolutional Neural Network (RCNN) for classification of gestures and also implement networked GPU server(s) which are powerful and are not fully utilized, and are further cost expensive. Conventional techniques and systems also rely on the presence of high-bandwidth, low latency network connection between the device and the abovementioned server. Unlike the conventional systems and methods/technique(s) as mentioned above, embodiments of the present disclosure provide systems and methods for an On-Device pointing finger based gestural interface for devices (e.g., Smartphones) and Video See-Through Headmounts (VSTH) or video see-through head mounted devices. By, using the video see through head mounted devices by the present disclosure makes the system 100 of the present disclosure a light weight gestural interface for classification of pointing-hand gestures being performed by the user purely on device (specifically smartphones and video see through head-mounts). Further, the system 100 of the present disclosure implements and executes a memory and compute efficient MobileNetv2 architecture to localise hand candidate(s) and a different fingertip regressor framework to track the user's fingertip and Bi-directional Long Short-Term Memory (Bi-LSTM) model to classify the gestures. Advantages of such an architecture or Cascaded Deep Learning Model (CDLM) as implemented by the system 100 of the present disclosure, is that the system 100 does not rely on the presence of a powerful and networked GPU server. Since all computation(s) is/are carried on the device itself, the system 100 can be deployed in a network-less environment and further opens new avenues in terms of applications in remote locations.

The written description describes the subject matter herein to enable any person skilled in the art to make and use the embodiments.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method for an on-device classification of fingertip motion patterns into gestures in real-time, the method comprising:

    receiving in real-time, in a Cascaded Deep Learning Model CDLM executed via the one or more hardware processors of a mobile communication device (302), a plurality of Red, Green and Blue RGB input images from a live feed or a video from an image capturing device, wherein the CDLM comprises a MobileNetV2 as an object detector, a Fingertip regressor and a Bidirectional Long Short Term Memory Bi-LSTM Network, for accurate gesture recognition, and wherein the CDLM is ported on the mobile communication device and removes hand gesture recognition framework dependence on a remote server;
    detecting in real-time, using the MobileNetV2 comprised in the CDLM executed via the one or more hardware processors on the mobile communication device, a plurality of hand candidate bounding boxes from the received plurality of RGB input images (304), wherein each of the plurality of hand candidate bounding boxes is specific to a corresponding RGB image from the received plurality of RGB input images, wherein each of the plurality of hand candidate bounding boxes comprises a hand candidate, and wherein each of the plurality of hand candidate bounding boxes comprising the hand candidate depicts a pointing gesture pose;
    downscaling, the hand candidate from each of the plurality of hand candidate bounding boxes to obtain a set of down-scaled hand candidates (306);
    detecting in real-time, using the Fingertip regressor comprised in the CDLM executed via the one or more hardware processors on the mobile communication device, a spatial location of a fingertip from each down-scaled hand candidate from the set of down-scaled hand candidates (308), wherein a first coordinate and a second coordinate are derived from the spatial location of the fingertip, wherein the spatial location of the fingertip from the set of down-scaled hand candidates represents a fingertip motion pattern, wherein the Fingertip regressor implemented based on a Convolutional Neural Network CNN architecture to localise the first coordinate and the second coordinate of the fingertip, wherein the CNN consists of two convolutional blocks and three fully connected layers to regress over the fingertip spatial location, wherein each of the two convolutional blocks have three convolutional layers followed by a max-pooling layer; and
    classifying in real-time, via the Bi-LSTM Network comprised in the CDLM executed via the one or more hardware processors on the mobile communication device, using the first coordinate and the second coordinate from the spatial location of the fingertip, the fingertip motion pattern into the one or more hand gestures (310).

2. The processor implemented method of claim 1, wherein the step of classifying the fingertip motion pattern into one or more hand gestures comprises applying a regression technique on the first coordinate and the second coordinate of the fingertip.

3. The processor implemented method of claim 1, wherein an absence of a positive pointing-finger hand detection on a set of consecutive frames in the plurality of RGB input images is indicative of an end of the hand gesture.

4. A system (100) for classification of fingertip motion patterns into gestures in real-time, the system comprising:

    a memory (102) storing instructions;

one or more communication interfaces (106); and
one or more hardware processors (104) coupled to the memory (102) via the one or more communication interfaces (106), wherein the one or more hardware processors (104) are configured by the instructions to:

receive in real-time, in a Cascaded Deep Learning Model CDLM executed via the one or more hardware processors of the system, a plurality of Red, Green and Blue (RGB) input images from a live feed or a video from an image capturing device, wherein the CDLM comprises a MobileNetV2 as an object detector, a Fingertip regressor and a Bidirectional Long Short Term Memory Bi-LSTM Network, for accurate gesture recognition, and wherein the CDLM is ported on the mobile communication device and removes hand gesture recognition framework dependence on a remote server;

detect in real-time, using the MobileNetV2 comprised in the CDLM executed via the one or more hardware processors on the system, a plurality of hand candidate bounding boxes from the received plurality of RGB input images, wherein each of the plurality of hand candidate bounding boxes is specific to a corresponding RGB image from the received plurality of RGB input images, wherein each of the plurality of hand candidate bounding boxes comprises a hand candidate, and wherein each of the plurality of hand candidate bounding boxes comprising the hand candidate depicts a pointing gesture pose;

downscale, the hand candidate from each of the plurality of hand candidate bounding boxes to obtain a set of down-scaled hand candidates;

detect in real-time, using the Fingertip regressor comprised in the CDLM executed via the one or more hardware processors on the system, a spatial location of a fingertip from each down-scaled hand candidate from the set of down-scaled hand candidates, wherein a first coordinate and a second coordinate are derived from the spatial location of the fingertip, wherein the spatial location of the fingertip from the set of down-scaled hand candidates represents a fingertip motion pattern, wherein the Fingertip regressor implemented based on a Convolutional Neural Network CNN architecture to localise the first coordinate and the second coordinate of the fingertip, wherein the CNN consists of two convolutional blocks and three fully connected layers to regress over the fingertip spatial location, wherein each of the two convolutional blocks have three convolutional layers followed by a max-pooling layer; and

classify in real-time, via the Bi-LSTM Network comprised in the CDLM executed via the one or more hardware processors on the system, using the first coordinate and the second coordinate from the spatial location of the fingertip, the fingertip motion pattern into the one or more hand gestures.

5. The system of claim 4, wherein the fingertip motion pattern is classified into one or more hand gestures by applying a regression technique on the first coordinate and the second coordinate of the fingertip.

6. The system of claim 4, wherein an absence of a positive pointing-finger hand detection on a set of consecutive frames in the plurality of RGB input images is indicative of an end of the hand gesture.

7. One or more non-transitory machine readable information storage mediums comprising one or more instructions which when executed by one or more hardware processors cause an on-device classification of fingertip motion patterns into gestures in real-time by:

receiving in real-time, in a Cascaded Deep Learning Model CDLM executed via the one or more hardware processors of a mobile communication device, a plurality of Red, Green and Blue RGB input images from a live feed or a video from an image capturing device,

wherein the CDLM comprises a MobileNetV2 as an object detector, a Fingertip regressor and a Bidirectional Long Short Term Memory (Bi-LSTM) Network, for accurate gesture recognition, and wherein the CDLM is ported on the mobile communication device and removes hand gesture recognition framework dependence on a remote server;

detecting in real-time, using the MobileNetV2 comprised in the CDLM executed via the one or more hardware processors on the mobile communication device, a plurality of hand candidate bounding boxes from the received plurality of RGB input images, wherein each of the plurality of hand candidate bounding boxes is specific to a corresponding RGB image from the received plurality of RGB input images, wherein each of the plurality of hand candidate bounding boxes comprises a hand candidate, and wherein each of the plurality of hand candidate bounding boxes comprising the hand candidate depicts a pointing gesture pose;

downscaling, the hand candidate from each of the plurality of hand candidate bounding boxes to obtain a set of down-scaled hand candidates;

detecting in real-time, using the Fingertip regressor comprised in the CDLM executed via the one or more hardware processors on the mobile communication device, a spatial location of a fingertip from each down-scaled hand candidate from the set of down-scaled hand candidates, wherein a first coordinate and a second coordinate are derived from the spatial location of the fingertip, wherein the spatial location of the fingertip from the set of down-scaled hand candidates represents a fingertip motion pattern, wherein the Fingertip regressor implemented based on a Convolutional Neural Network CNN architecture to localise the first coordinate and the second coordinate of the fingertip, wherein the CNN consists of two convolutional blocks and three fully connected layers to regress over the fingertip spatial location, wherein each of the two convolutional blocks have three convolutional layers followed by a max-pooling layer; and

classifying in real-time, via the Bi-LSTM Network comprised in the CDLM executed via the one or more hardware processors on the mobile communication device, using the first coordinate and the second coordinate from the spatial location of the fingertip, the fingertip motion pattern into the one or more hand gestures.

8. The one or more non-transitory machine readable information storage mediums of claim 7, wherein the step of classifying the fingertip motion pattern into one or more hand gestures comprises applying a regression technique on the first coordinate and the second coordinate of the fingertip.

9. The one or more non-transitory machine readable information storage mediums of claim 7, wherein an absence of a positive pointing-finger hand detection on a set of consecutive frames in the plurality of RGB input images is indicative of an end of the hand gesture.

**Patentansprüche**

1. Prozessorimplementiertes Verfahren für eine geräteinterne Klassifizierung von Fingerspitzenbewegungsmustern in Gesten in Echtzeit, wobei das Verfahren umfasst:

Empfangen einer Mehrzahl von roten, grünen und blauen RGB-Eingangsbildern von einem Live-Feed oder einem Video von einer Bilderfassungsvorrichtung in Echtzeit in einem Cascaded-Deep-Learning-Modell, CDLM, das über den einen oder die mehreren Hardwareprozessoren einer mobilen Kommunikationsvorrichtung (302) ausgeführt wird, wobei das CDLM ein MobileNetV2 als einen Objektdetektor, einen Fingerspitzenregressor und ein bidirektionales Long-Short-Term-Memory-Bi-LSTM-Netzwerk zur genauen Gestenerkennung umfasst, und wobei das CDLM auf der mobilen Kommunikationsvorrichtung portiert ist und die Abhängigkeit des Handgestenerkennungs-Frameworks von einem entfernten Server entfernt;

Erkennen einer Mehrzahl von Handkandidatenbegrenzungskästen aus der empfangenen Mehrzahl von RGB-Eingangsbildern (304) in Echtzeit unter Verwendung des MobileNetV2, das in dem CDLM enthalten ist, das über den einen oder die mehreren Hardwareprozessoren auf der mobilen Kommunikationsvorrichtung ausgeführt wird, wobei j eder der Mehrzahl von Handkandidatenbegrenzungskästen für ein entsprechendes RGB-Bild aus der empfangenen Mehrzahl von RGB-Eingangsbildern spezifisch ist, wobei jeder der Mehrzahl von Handkandidatenbegrenzungskästen einen Handkandidaten umfasst, und wobei jeder der Mehrzahl von Handkandidatenbegrenzungskästen, der den Handkandidaten umfasst, eine zeigende Gestenpose darstellt;

Herunterskalieren des Handkandidaten aus jedem der Mehrzahl von Handkandidatenbegrenzungskästen, um einen Satz von herunterskalierten Handkandidaten (306) zu erhalten;

Erkennen eines räumlichen Orts einer Fingerspitze aus jedem herunterskalierten Handkandidaten aus dem Satz von herunterskalierten Handkandidaten (308) in Echtzeit unter Verwendung des Fingerspitzenregressors, der in dem CDLM enthalten ist, das über den einen oder die mehreren Hardwareprozessoren auf der mobilen Kommunikationsvorrichtung ausgeführt wird, wobei eine erste Koordinate und eine zweite Koordinate aus dem räumlichen Ort der Fingerspitze abgeleitet werden, wobei der räumliche Ort der Fingerspitze aus dem Satz von herunterskalierten Handkandidaten ein Fingerspitzenbewegungsmuster darstellt, wobei der Fingerspitzenregressor basierend auf einer Convolutional-Neural-Network-, CNN-, Architektur implementiert wird, um die erste Koordinate und die zweite Koordinate der Fingerspitze zu lokalisieren, wobei das CNN aus zwei Faltungsblöcken und drei vollständig verbundenen Schichten besteht, um über den räumlichen Ort der Fingerspitze zu regressen, wobei jeder der zwei Faltungsblöcke drei Faltungsschichten gefolgt von einer Max-Pooling-Schicht aufweist; und Klassifizieren des Fingerspitzenbewegungsmusters in Echtzeit über das Bi-LSTM-Netzwerk, das in dem CDLM enthalten ist, das über den einen oder die mehreren Hardwareprozessoren auf der mobilen Kommunikationsvorrichtung ausgeführt wird, unter Verwendung der ersten Koordinate und der zweiten Koordinate aus dem räumlichen Ort der Fingerspitze in die eine oder die mehreren Handgesten (310).

2. Prozessorimplementiertes Verfahren nach Anspruch 1, wobei der Schritt des Klassifizierens des Fingerspitzenbewegungsmusters in eine oder mehrere Handgesten das Anwenden einer Regressionstechnik auf die erste Koordinate und die zweite Koordinate der Fingerspitze umfasst.

3. Prozessorimplementiertes Verfahren nach Anspruch 1, wobei ein Fehlen einer positiven Zeigefingerhanderkennung auf einem Satz von aufeinanderfolgenden Einzelbildern in der Mehrzahl von RGB-Eingabebildern ein Ende der Handgeste anzeigt.

4. System (100) zur Klassifizierung von Fingerspitzenbewegungsmustern in Gesten in Echtzeit, wobei das System umfasst:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Empfangen einer Mehrzahl von roten, grünen und blauen RGB-Eingangsbildern von einem Live-Feed oder einem Video von einer Bilderfassungsvorrichtung in Echtzeit in einem Cascaded-Deep-Learning-Modell, CDLM, das über den einen oder die mehreren Hardwareprozessoren des Systems ausgeführt wird, wobei das CDLM ein MobileNetV2 als einen Objektdetektor, ein Fingerspitzenregressor und ein bidirektionales Long-Short-Term-Memory-Bi-LSTM-Netzwerk zur genauen Gestenerkennung umfasst, und wobei das CDLM auf der mobilen Kommunikationsvorrichtung portiert ist und die Abhängigkeit des Handgestenerkennungs-Frameworks von einem entfernten Server entfernt;
Erkennen einer Mehrzahl von Handkandidatenbegrenzungskästen aus der empfangenen Mehrzahl von RGB-Eingangsbildern in Echtzeit unter Verwendung des MobileNetV2, das in dem CDLM enthalten ist, das über den einen oder die mehreren Hardwareprozessoren auf dem System ausgeführt wird, wobei jeder der Mehrzahl von Handkandidatenbegrenzungskästen für ein entsprechendes RGB-Bild aus der empfangenen Mehrzahl von RGB-Eingangsbildern spezifisch ist, wobei jeder der Mehrzahl von Handkandidatenbegrenzungskästen einen Handkandidaten umfasst, und wobei jeder der Mehrzahl von Handkandidatenbegrenzungskästen, der den Handkandidaten umfasst, eine zeigende Gestenpose darstellt;
Herunterskalieren des Handkandidaten aus jedem der Mehrzahl von Handkandidatenbegrenzungskästen, um einen Satz von herunterskalierten Handkandidaten zu erhalten;
Erkennen eines räumlichen Orts einer Fingerspitze aus jedem herunterskalierten Handkandidaten aus dem Satz von herunterskalierten Handkandidaten in Echtzeit unter Verwendung des Fingerspitzenregressors, der in dem CDLM enthalten ist, das über den einen oder die mehreren Hardwareprozessoren auf dem System ausgeführt wird, wobei eine erste Koordinate und eine zweite Koordinate aus dem räumlichen Ort der Fingerspitze abgeleitet werden, wobei der räumliche Ort der Fingerspitze aus dem Satz von herunterskalierten Handkandidaten ein Fingerspitzenbewegungsmuster darstellt, wobei der Fingerspitzenregressor basierend auf einer Convolutional-Neural-Network-, CNN-, Architektur implementiert wird, um die erste Koordinate und die zweite Koordinate der Fingerspitze zu lokalisieren, wobei das CNN aus zwei Faltungsblöcken und drei vollständig verbundenen Schichten besteht, um über den räumlichen Ort der Fingerspitze zu regressen, wobei jeder der zwei Faltungsblöcke drei Faltungsschichten gefolgt von einer Max-Pooling-Schicht aufweist; und
Klassifizieren des Fingerspitzenbewegungsmusters in Echtzeit über das Bi-LSTM-Netzwerk, das in dem CDLM enthalten ist, das über den einen oder die mehreren Hardwareprozessoren auf dem System ausgeführt wird, unter Verwendung der ersten Koordinate und der zweiten Koordinate aus dem räumlichen Ort der Fingerspitze in die eine oder die mehreren Handgesten.

5. System nach Anspruch 4, wobei das Fingerspitzenbewegungsmuster durch Anwenden einer Regressionstechnik auf die erste Koordinate und die zweite Koordinate der Fingerspitze in eine oder mehrere Handgesten klassifiziert wird.

6. System nach Anspruch 4, wobei ein Fehlen einer positiven Zeigefingerhanderkennung auf einem Satz von aufeinanderfolgenden Einzelbildern in der Mehrzahl von RGB-Eingabebildern ein Ende der Handgeste anzeigt.

7. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, eine geräteinterne Klassifizierung von Fingerspitzenbewegungsmustern in Gesten in Echtzeit bewirken durch:

Empfangen einer Mehrzahl von roten, grünen und blauen RGB-Eingangsbildern von einem Live-Feed oder einem Video von einer Bilderfassungsvorrichtung in Echtzeit in einem Cascaded-Deep-Learning-Modell, CDLM, das über den einen oder die mehreren Hardwareprozessoren einer mobilen Kommunikationsvorrichtung ausgeführt wird, wobei das CDLM ein MobileNetV2 als einen Objektdetektor, einen Fingerspitzenregressor und ein bidirektionales Long-Short-Term-Memory-Bi-LSTM-Netzwerk zur genauen Gestenerkennung umfasst, und wobei das CDLM auf der mobilen Kommunikationsvorrichtung portiert ist und die Abhängigkeit des Handgestenerkennungs-Frameworks von einem entfernten Server entfernt;

Erkennen einer Mehrzahl von Handkandidatenbegrenzungskästen aus der empfangenen Mehrzahl von RGB-Eingangsbildern in Echtzeit unter Verwendung des MobileNetV2, das in dem CDLM enthalten ist, das über den einen oder die mehreren Hardwareprozessoren auf der mobilen Kommunikationsvorrichtung ausgeführt wird, wobei jeder der Mehrzahl von Handkandidatenbegrenzungskästen für ein entsprechendes RGB-Bild aus der empfangenen Mehrzahl von RGB-Eingangsbildern spezifisch ist, wobei jeder der Mehrzahl von Handkandidatenbegrenzungskästen einen Handkandidaten umfasst, und wobei jeder der Mehrzahl von Handkandidatenbegrenzungskästen, der den Handkandidaten umfasst, eine zeigende Gestenpose darstellt;

Herunterskalieren des Handkandidaten aus jedem der Mehrzahl von Handkandidatenbegrenzungskästen, um einen Satz von herunterskalierten Handkandidaten zu erhalten;

Erkennen eines räumlichen Orts einer Fingerspitze aus jedem herunterskalierten Handkandidaten aus dem Satz von herunterskalierten Handkandidaten in Echtzeit unter Verwendung des Fingerspitzenregressors, der in dem CDLM enthalten ist, das über den einen oder die mehreren Hardwareprozessoren auf der mobilen Kommunikationsvorrichtung ausgeführt wird, wobei eine erste Koordinate und eine zweite Koordinate aus dem räumlichen Ort der Fingerspitze abgeleitet werden, wobei der räumliche Ort der Fingerspitze aus dem Satz von herunterskalierten Handkandidaten ein Fingerspitzenbewegungsmuster darstellt, wobei der Fingerspitzenregressor basierend auf einer Convolutional-Neural-Network-, CNN-, Architektur implementiert wird, um die erste Koordinate und die zweite Koordinate der Fingerspitze zu lokalisieren, wobei das CNN aus zwei Faltungsblöcken und drei vollständig verbundenen Schichten besteht, um über den räumlichen Ort der Fingerspitze zu regressen, wobei jeder der zwei Faltungsblöcke drei Faltungsschichten gefolgt von einer Max-Pooling-Schicht aufweist; und

Klassifizieren des Fingerspitzenbewegungsmusters in Echtzeit über das Bi-LSTM-Netzwerk, das in dem CDLM enthalten ist, das über den einen oder die mehreren Hardwareprozessoren auf der mobilen Kommunikationsvorrichtung ausgeführt wird, unter Verwendung der ersten Koordinate und der zweiten Koordinate aus dem räumlichen Ort der Fingerspitze in die eine oder die mehreren Handgesten.

8. Ein oder mehrere nichtflüchtige maschinenlesbare Informationsspeichermedien nach Anspruch 7, wobei der Schritt des Klassifizierens des Fingerspitzenbewegungsmusters in eine oder mehrere Handgesten das Anwenden einer Regressionstechnik auf die erste Koordinate und die zweite Koordinate der Fingerspitze umfasst.

9. Ein oder mehrere nichtflüchtige maschinenlesbare Informationsspeichermedien nach Anspruch 7, wobei ein Fehlen einer positiven Zeigefingerhanderkennung auf einem Satz von aufeinanderfolgenden Einzelbildern in der Mehrzahl von RGB-Eingabebildern ein Ende der Handgeste anzeigt.

**Revendications**

1. Procédé mis en oeuvre par processeur pour une classification sur dispositif de schémas de mouvement de bout du doigt en des gestes en temps réel, le procédé comprenant les étapes ci-dessous consistant à :

recevoir en temps réel, dans un modèle d'apprentissage profond en cascade, CDLM, exécuté par l'intermédiaire dudit un ou desdits plusieurs processeurs matériels d'un dispositif de communication mobile (302), une pluralité d'images d'entrée rouge, vert et bleu, RGB, provenant d'un flux en direct ou une vidéo provenant d'un dispositif de capture d'images, dans lequel le modèle CDLM comprend une architecture MobileNetV2 en tant qu'un détecteur d'objet, un régresseur de bout du doigt et un réseau de mémoire à court et long terme bidirectionnelle, Bi-LSTM, pour une reconnaissance de gestes précise, et dans lequel le modèle CDLM est porté sur le dispositif de communication mobile et supprime une dépendance de cadre de reconnaissance de gestes de la main sur un serveur distant ;

détecter en temps réel, à l'aide de l'architecture MobileNetV2 comprise dans le modèle CDLM exécuté par l'intermédiaire dudit un ou desdits plusieurs processeurs matériels sur le dispositif de communication mobile, une pluralité de rectangles englobants de candidats de main à partir de la pluralité reçue d'images d'entrée RGB (304), dans lequel chaque rectangle englobant de la pluralité de rectangles englobants de candidats de main est spécifique à une image RGB correspondante de la pluralité reçue d'images d'entrée RGB, dans lequel chaque rectangle englobant de la pluralité de rectangles englobants de candidats de main comprend un candidat de main, et dans lequel chaque rectangle englobant de la pluralité de rectangles englobants de candidats de main comprenant le candidat de main représente une pose de geste de pointage ;

réduire l'échelle du candidat de main à partir de chaque rectangle englobant de la pluralité de rectangles englobants de candidats de main, en vue d'obtenir un ensemble de candidats de main à échelle réduite (306) ;

détecter en temps réel, à l'aide du régresseur de bout du doigt compris dans le modèle CDLM exécuté par l'intermédiaire dudit un ou desdits plusieurs processeurs matériels sur le dispositif de communication mobile, un emplacement spatial d'un bout du doigt à partir de chaque candidat de main à échelle réduite de l'ensemble de candidats de main à échelle réduite (308), dans lequel une première coordonnée et une deuxième coordonnée sont dérivées de l'emplacement spatial de bout du doigt, dans lequel l'emplacement spatial de bout du doigt de l'ensemble de candidats de main à échelle réduite représente un schéma de mouvement de bout du doigt, dans lequel le régresseur de bout du doigt est mis en oeuvre sur la base d'une architecture de réseau de neurones convolutifs, CNN, pour localiser la première coordonnée et la deuxième coordonnée du bout du doigt, dans lequel le réseau CNN se compose de deux blocs convolutifs et de trois couches entièrement connectées pour régresser sur l'emplacement spatial de bout du doigt, dans lequel chacun des deux blocs convolutifs présente trois couches de convolution suivies d'une couche de mise en commun maximale (max-pooling) ; et

classer en temps réel, par l'intermédiaire du réseau de mémoire Bi-LSTM compris dans le modèle CDLM exécuté par l'intermédiaire dudit un ou desdits plusieurs processeurs matériels sur le dispositif de communication mobile, à l'aide de la première coordonnée et de la deuxième coordonnée provenant de l'emplacement spatial de bout du doigt, le schéma de mouvement de bout du doigt, en ledit un ou lesdits plusieurs gestes de la main (310).

2. Procédé mis en oeuvre par processeur selon la revendication 1, dans lequel l'étape de classification du schéma de mouvement de bout du doigt en un ou plusieurs gestes de la main comprend l'étape consistant à appliquer une technique de régression sur la première coordonnée et la deuxième coordonnée du bout du doigt.

3. Procédé mis en oeuvre par processeur selon la revendication 1, dans lequel l'absence d'une détection positive de main pointant du doigt sur un ensemble de trames consécutives dans la pluralité d'images d'entrée RGB est indicative d'une fin du geste de la main.

4. Système (100) de classification de schémas de mouvement de bout du doigt en des gestes en temps réel, le système comprenant :

une mémoire (102) stockant des instructions ;
une ou plusieurs interfaces de communication (106) ; et
un ou plusieurs processeurs matériels (104) couplés à la mémoire (102) par l'intermédiaire de ladite une ou desdites plusieurs interfaces de communication (106), dans lesquels ledit un ou lesdits plusieurs processeurs matériels (104) sont configurés, par les instructions, de manière à mettre en oeuvre les étapes ci-dessous consistant à :

recevoir en temps réel, dans un modèle d'apprentissage profond en cascade, CDLM, exécuté par l'intermédiaire dudit un ou desdits plusieurs processeurs matériels du système, une pluralité d'images d'entrée rouge, vert et bleu, RGB, provenant d'un flux en direct ou une vidéo provenant d'un dispositif de capture d'images, dans lequel le modèle CDLM comprend une architecture MobileNetV2 en tant qu'un détecteur d'objet, un régresseur de bout du doigt et un réseau de mémoire à court et long terme bidirectionnelle, Bi-LSTM, pour une reconnaissance de gestes précise, et dans lequel le modèle CDLM est porté sur le dispositif de communication mobile et supprime une dépendance de cadre de reconnaissance de gestes de la main sur un serveur distant ;

détecter en temps réel, à l'aide de l'architecture MobileNetV2 comprise dans le modèle CDLM exécuté par l'intermédiaire dudit un ou desdits plusieurs processeurs matériels sur le système, une pluralité de rectangles englobants de candidats de main à partir de la pluralité reçue d'images d'entrée RGB, dans lequel chaque rectangle englobant de la pluralité de rectangles englobants de candidats de main est spécifique à une image RGB correspondante de la pluralité reçue d'images d'entrée RGB, dans lequel chaque rectangle englobant de la pluralité de rectangles englobants de candidats de main comprend un candidat de main, et dans lequel chaque rectangle englobant de la pluralité de rectangles englobants de candidats de main comprenant le candidat de main représente une pose de geste de pointage ;

réduire l'échelle du candidat de main à partir de chaque rectangle englobant de la pluralité de rectangles englobants de candidats de main, en vue d'obtenir un ensemble de candidats de main à échelle réduite ;

détecter en temps réel, à l'aide du régresseur de bout du doigt compris dans le modèle CDLM exécuté par l'intermédiaire dudit un ou desdits plusieurs processeurs matériels sur le système, un emplacement spatial d'un bout du doigt à partir de chaque candidat de main à échelle réduite de l'ensemble de candidats de main à échelle réduite, dans lequel une première coordonnée et une deuxième coordonnée sont dérivées de l'emplacement spatial de bout du doigt, dans lequel l'emplacement spatial de bout du doigt de l'ensemble de candidats de main à échelle réduite représente un schéma de mouvement de bout du doigt, dans lequel le régresseur de bout du doigt est mis en oeuvre sur la base d'une architecture de réseau de neurones convolutifs, CNN, pour localiser la première coordonnée et la deuxième coordonnée du bout du doigt, dans lequel le réseau CNN se compose de deux blocs convolutifs et de trois couches entièrement connectées pour régresser sur l'emplacement spatial de bout du doigt, dans lequel chacun des deux blocs convolutifs présente trois couches de convolution suivies d'une couche de mise en commun maximale (max-pooling) ; et classer en temps réel, par l'intermédiaire du réseau de mémoire Bi-LSTM compris dans le modèle CDLM exécuté par l'intermédiaire dudit un ou desdits plusieurs processeurs matériels sur le système, à l'aide de la première coordonnée et de la deuxième coordonnée provenant de l'emplacement spatial de bout du doigt, le schéma de mouvement de bout du doigt, en ledit un ou lesdits plusieurs gestes de la main.

5. Système selon la revendication 4, dans lequel le schéma de mouvement de bout du doigt est classé en un ou plusieurs gestes de la main en appliquant une technique de régression sur la première coordonnée et la deuxième coordonnée du bout du doigt.

6. Système selon la revendication 4, dans lequel l'absence d'une détection positive de main pointant du doigt sur un ensemble de trames consécutives dans la pluralité d'images d'entrée RGB est indicative d'une fin du geste de la main.

7. Un ou plusieurs supports non transitoires de stockage d'informations lisibles par machine comprenant une ou plusieurs instructions qui, lorsqu'elles sont exécutées par un ou plusieurs processeurs matériels, occasionnent une classification sur dispositif de schémas de mouvement de bout du doigt en des gestes en temps réel, en mettant en oeuvre les étapes ci-dessous consistant à :

recevoir en temps réel, dans un modèle d'apprentissage profond en cascade, CDLM, exécuté par l'intermédiaire dudit un ou desdits plusieurs processeurs matériels d'un dispositif de communication mobile, une pluralité d'images d'entrée rouge, vert et bleu, RGB, provenant d'un flux en direct ou une vidéo provenant d'un dispositif de capture d'images, dans lequel le modèle CDLM comprend une architecture MobileNetV2 en tant qu'un détecteur d'objet, un régresseur de bout du doigt et un réseau de mémoire à court et long terme bidirectionnelle, Bi-LSTM, pour une reconnaissance de gestes précise, et dans lequel le modèle CDLM est porté sur le dispositif de communication mobile et supprime une dépendance de cadre de reconnaissance de gestes de la main sur un serveur distant ;
détecter en temps réel, à l'aide de l'architecture MobileNetV2 comprise dans le modèle CDLM exécuté par l'intermédiaire dudit un ou desdits plusieurs processeurs matériels sur le dispositif de communication mobile, une pluralité de rectangles englobants de candidats de main à partir de la pluralité reçue d'images d'entrée RGB, dans lequel chaque rectangle englobant de la pluralité de rectangles englobants de candidats de main est spécifique à une image RGB correspondante de la pluralité reçue d'images d'entrée RGB, dans lequel chaque rectangle englobant de la pluralité de rectangles englobants de candidats de main comprend un candidat de main, et dans lequel chaque rectangle englobant de la pluralité de rectangles englobants de candidats de main comprenant le candidat de main représente une pose de geste de pointage ;
réduire l'échelle du candidat de main à partir de chaque rectangle englobant de la pluralité de rectangles englobants de candidats de main, en vue d'obtenir un ensemble de candidats de main à échelle réduite ;
détecter en temps réel, à l'aide du régresseur de bout du doigt compris dans le modèle CDLM exécuté par l'intermédiaire dudit un ou desdits plusieurs processeurs matériels sur le dispositif de communication mobile, un emplacement spatial d'un bout du doigt à partir de chaque candidat de main à échelle réduite de l'ensemble de candidats de main à échelle réduite, dans lequel une première coordonnée et une deuxième coordonnée sont dérivées de l'emplacement spatial de bout du doigt, dans lequel l'emplacement spatial de bout du doigt de l'ensemble de candidats de main à échelle réduite représente un schéma de mouvement de bout du doigt, dans lequel le régresseur de bout du doigt est mis en oeuvre sur la base d'une architecture de réseau de neurones convolutifs, CNN, pour localiser la première coordonnée et la deuxième coordonnée du bout du doigt, dans lequel le réseau CNN se compose de deux blocs convolutifs et de trois couches entièrement connectées pour régresser sur l'emplacement spatial de bout du doigt, dans lequel chacun des deux blocs convolutifs présente trois couches de convolution suivies d'une couche de mise en commun maximale (max-pooling) ; et classer en temps réel, par l'intermédiaire du réseau de mémoire Bi-LSTM compris dans le modèle CDLM exécuté par l'intermédiaire dudit un ou desdits plusieurs processeurs matériels sur le dispositif de communication mobile, à l'aide de la première coordonnée et de la deuxième coordonnée provenant de l'emplacement spatial de bout du doigt, le schéma de mouvement de bout du doigt, en ledit un ou lesdits plusieurs gestes de la main.

8. Ledit un ou lesdits plusieurs supports non transitoires de stockage d'informations lisibles par machine selon la revendication 7, dans lesquels l'étape de classification du schéma de mouvement de bout du doigt en un ou plusieurs gestes de la main comprend l'étape consistant à appliquer une technique de régression sur la première coordonnée et la deuxième coordonnée du bout du doigt.

9. Ledit un ou lesdits plusieurs supports non transitoires de stockage d'informations lisibles par machine selon la revendication 7, dans lesquels l'absence d'une détection positive de main pointant du doigt sur un ensemble de trames consécutives dans la pluralité d'images d'entrée RGB est indicative d'une fin du geste de la main.

SYSTEM
100

MEMORY
102

DATABASE
108

HARDWARE
PROCESSOR(S)
104

INTERFACE(S)
106

**FIG. 1**

**FIG. 2**

Table within figure (c):

| Fingertip (x, y) |
|---|
| 45, 365 |
| 290, 340 |
| 560, 410 |

| | |
|---|---|
| CheckMark | 0.920 |
| Right ✓ | 0.021 |
| Rectangle | 0.020 |
| X | 0.018 |
| ... | ... |

(a) MobileNetV2    (b) Fingertip Regressor    (c) LSTM Classification Network

Select Hand Bounding Box and Resize

Feed Spatial Data to Bidirectional LSTM Network

Receiving in real-time, in a Cascaded Deep Learning Model (CDLM) executed via the one or more hardware processors of a mobile communication device, a plurality of Red, Green and Blue (RGB) input images from an image capturing device, wherein each of the plurality of RGB input images comprises a hand gesture    302

Detecting in real-time, using an object detector comprised in the CDLM executed via the hardware processors on the mobile communication device, a plurality of hand candidate bounding boxes from the received plurality of RGB input images, wherein each of the plurality of hand candidate bounding boxes is specific to a corresponding RGB image from the received plurality of RGB input images, wherein each of the plurality of hand candidate bounding boxes comprises a hand candidate    304

Downscaling in real-time, the hand candidate from each of the plurality of hand candidate bounding boxes to obtain a set of down-scaled hand candidates    306

Detecting in real-time, using a Fingertip regressor comprised in the CDLM executed via the one or more hardware processors on the mobile communication device, a spatial location of a fingertip from each down-scaled hand candidate from the set of down-scaled hand candidates, wherein the spatial location of the fingertip from the set of down-scaled hand candidates represents a fingertip motion pattern    308

Classifying in real-time, via a Bidirectional Long Short Term Memory (Bi-LSTM) Network comprised in the cascaded deep learning model executed via the one or more hardware processors on the mobile communication device, using a first coordinate and a second coordinate from the spatial location of the fingertip, the fingertip motion pattern into one or more hand gestures    310

**FIG. 3**

FIG. 4

FIG. 5

(a)    (b)

(c)    (d)

——— MobileNetV2    — — · YOLOv2    ········ Faster R-CNN
Present            prior art          prior art
disclosure         technique          technique

**FIG. 6**

**Fingertip Detection**

FIG. 7A

**FIG. 7B**

Confusion Matrix

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **GARG GAURAV et al.** *DrawInAir: A Lightweight Gestural Interface Based on Fingertip Regression*
- **DANI MEGHAL et al.** *Mid-Air Fingertip-Based User Interaction in Mixed Reality*
- Deepfinger: A cascade convolutional neuron network approach to finger key point detection in egocentric vision with mobile camera. Systems, Man, and Cybernetics (SMC), 2015 IEEE International Conference on. IEEE, 2944-2949
- **HUANG, Y. ; LIU, X. ; ZHANG, X. ; JIN, L.** A pointing gesture based egocentric interaction system: Dataset, approach and application. *Proceedings of the IEEE Conference on Computer Vision and Pattern Recognition Workshops,* 16-23
- Conventional technique/research X - 'Comparison of two real-time hand gesture recognition systems involving stereo cameras, depth camera, and inertial sensor. **LIU, K. ; KEHTARNAVAZ, N. ; CARLSOHN, M.** SPIE Photonics Europe. International Society for Optics and Photonics, 2014, 91390C-91390C
- **FAN, R.-E. ; CHANG, K.-W. ; HSIEH, C.-J. ; WANG, X.-R. ; LIN, C.-J.** Conventional technique/research Y - 'Liblinear: A library for large linear classification. *Journal of machine learning research,* August 2008, vol. 9, 1871-1874